(19) **Europäisches Patentamt**
**European Patent Office**
**Office européen des brevets**

(11) **EP 3 139 307 B1**

(12) **FASCICULE DE BREVET EUROPEEN**

(45) Date de publication et mention
de la délivrance du brevet:
**09.08.2023 Bulletin 2023/32**

(21) Numéro de dépôt: **16186917.7**

(22) Date de dépôt: **02.09.2016**

(51) Classification Internationale des Brevets (IPC):
**G06V 10/54** (2022.01)     **G06V 40/40** (2022.01)
**G06V 10/42** (2022.01)

(52) Classification Coopérative des Brevets (CPC):
**G06V 40/40; G06V 10/431; G06V 10/54**

(54) **PROCEDE DE CARACTERISATION D'UN MATERIAU PAR ANALYSE DE TAVELURES**

VERFAHREN ZUR CHARAKTERISIERUNG EINES MATERIALS DURCH SPECKLEMUSTER-ANALYSE

METHOD FOR CHARACTERISING A MATERIAL BY SPECKLE ANALYSIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2015 FR 1558272**

(43) Date de publication de la demande:
**08.03.2017 Bulletin 2017/10**

(73) Titulaire: **Idemia Identity & Security France 92400 Courbevoie (FR)**

(72) Inventeurs:
• **MAALOUF, Aldo**
**92130 Issy-les-Moulineaux (FR)**
• **GUILLEMOT, Florence**
**92130 Issy-les-Moulineaux (FR)**
• **CHIU, Rémy**
**92130 Issy-les-Moulineaux (FR)**

(74) Mandataire: **Idemia
2, place Samuel de Champlain
92400 Courbevoie (FR)**

(56) Documents cités:
**WO-A1-2006/049396     WO-A1-2014/198847
US-A1- 2014 055 775**

• **Shoude Chang ET AL: "Fingerprint Spoof Detection Using Near Infrared Optical Analysis" In: "State of the art in Biometrics", 27 juillet 2011 (2011-07-27), INTECH, XP055274349, * Section 3.3.1, ***
• **LI GUOQIANG ET AL: "Autocorrelation and DCT based quality metrics for fingerprint samples generated by smartphones", 2013 18TH INTERNATIONAL CONFERENCE ON DIGITAL SIGNAL PROCESSING (DSP), IEEE, 1 juillet 2013 (2013-07-01), pages 1-5, XP032498421, ISSN: 1546-1874, DOI: 10.1109/ICDSP.2013.6622784 [extrait le 2013-10-06]**

**Description**

DOMAINE DE L'INVENTION

L'invention concerne un procédé de caractérisation d'un matériau dans lequel une surface est formée, par l'analyse de tavelures générées sur la surface par un faisceau lumineux cohérent.

ETAT DE LA TECHNIQUE

L'analyse de tavelures générées sur la surface d'un matériau par un faisceau lumineux cohérent est déjà mise en oeuvre pour étudier des propriétés du matériau.

Ainsi on connaît de la demande de brevet FR3007170 un procédé de détermination du caractère vivant ou non d'un tissu.

Ce procédé comprend l'exposition de la surface à un faisceau lumineux cohérent pour générer sur ladite surface des tavelures. Les tavelures sont des figures d'interférences résultant des interférences du faisceau diffusé sur la surface. Une image des tavelures est acquise, puis cette image est analysée pour déterminer si le matériau constitutif de la surface est vivant ou non.

Ce procédé a déjà rendu de grands services. Cependant, l'analyse qui est mise en oeuvre sur l'image des tavelures n'est pas suffisamment précise pour permettre de déterminer de quel matériau il s'agit.

On connaît également du document WO2006/085252 un procédé d'analyse de tavelures générées sur une surface, mais cette fois pour surveiller l'évolution temporelle de l'aspect des tavelures pour détecter l'existence d'un flux sanguin sous-jacent, et encore une fois décider si le tissu est vivant ou non.

Ce procédé ne permet pas non plus de caractériser le matériau formant la surface.

On connaît encore du document WO 2006/049396 un procédé d'analyse de tavelures pour déterminer si le matériau constitutif de la surface sur laquelle apparaissent les tavelures est un tissu biologique authentique ou une reproduction. Ce procédé se base sur l'analyse de nuances de gris dans une image de tavelures formées sur la surface.

Ce procédé permet seulement de différencier un tissu biologique d'un tissu biologique et ne permet donc pas de différencier de nombreux matériaux, notamment des matériaux non biologiques.

PRESENTATION DE L'INVENTION

L'invention a pour but de permettre de déterminer un matériau constitutif d'une surface par l'analyse de tavelures générées sur ladite surface.

A cet égard, l'invention a pour objet un procédé de caractérisation d'un matériau dans lequel est formée une surface, comprenant les étapes consistant à :

- projeter sur la surface un faisceau lumineux cohérent, pour générer sur ladite surface des tavelures résultant d'interférences des rayons lumineux diffusés par ladite surface,
- acquérir une image de ladite surface sur laquelle apparaissent les tavelures,
- traiter ladite image pour calculer les valeurs de critères de caractérisation du matériau, et
- à partir desdits critères, déterminer le matériau constituant la surface,

dans lequel l'étape de traitement de l'image comprend :

- le calcul d'une fonction d'autocorrélation de l'intensité lumineuse sur l'image et le calcul de la valeur d'au moins un critère de caractérisation établi à partir de ladite fonction, ledit calcul comprenant :

  ◦ pour chaque pixel de l'image, l'établissement d'une première matrice dont les valeurs propres indiquent le degré d'autocorrélation de l'intensité lumineuse dudit pixel par rapport aux pixels voisins, et
  ◦ le calcul de la valeur du critère de caractérisation comme la moyenne sur l'image de la trace d'une seconde matrice obtenue par la transformée en cosinus discrète de la première matrice, et

- le calcul de la valeur d'au moins un critère représentatif d'une distribution de déphasages des rayons lumineux diffusés par la surface, ledit calcul comprenant le calcul d'une transformée en ondelettes de l'image, et le calcul de la valeur dudit critère parmi le groupe suivant :

  ◦ moyenne des phases des coefficients d'ondelettes sur l'image, ou
  ◦ écart-type des phases des coefficients d'ondelettes sur l'image.

Avantageusement, mais facultativement, le procédé de caractérisation d'un matériau selon l'invention peut en outre comprendre au moins l'une des caractéristiques suivantes :

- le calcul de la valeur d'au moins un critère de caractérisation à partir de la fonction d'autocorrélation de l'intensité lumineuse peut comprendre :

  ∘ le calcul de la valeur d'au moins un critère établi à partir de la transformée de Fourier de la fonction d'autocorrélation, et
  ∘ le calcul de la valeur d'au moins un critère établi à partir de la transformée en cosinus discrète de la fonction d'autocorrélation.

- un critère établi à partir de la transformée de Fourier de la fonction d'autocorrélation peut comprendre au moins l'un parmi le groupe suivant :

  ∘ moyenne de la transformée de Fourier de la fonction d'autocorrélation sur l'image, ou
  ∘ écart-type de la transformée de Fourier de la fonction d'autocorrélation sur l'image.

- le traitement de l'image peut en outre comprendre l'établissement d'une matrice d'autocorrélation de l'intensité lumineuse de l'image, et le calcul de la valeur d'un critère de caractérisation égal à la racine carrée de la somme des valeurs propres moyennes de ladite matrice sur l'image.
- l'étape de détermination du matériau constituant la surface peut en outre comprendre le calcul d'un score global à partir des valeurs des critères, et la classification du matériau par comparaison du score global avec une pluralité de plages prédéterminées correspondant à des matériaux respectifs.
- Le procédé peut également comprendre une étape préliminaire d'élaboration des plages de scores, ladite étape comprenant :

  ∘ pour une pluralité de surfaces formées dans des matériaux déterminés, mettre en oeuvre des étapes :

    ▪ de projection sur la surface d'un faisceau lumineux cohérent, pour générer sur ladite surface des tavelures résultant d'interférences des rayons lumineux diffusés par ladite surface,
    ▪ d'acquisition d'une image de ladite surface sur laquelle apparaissent les tavelures,
    ▪ de traitement de ladite image pour calculer au moins un critère de caractérisation du matériau, ledit traitement comprenant le calcul d'une fonction d'autocorrélation de l'intensité lumineuse sur l'image et le calcul de la valeur d'au moins un critère à partir de ladite fonction, le calcul de la valeur d'au moins un critère représentatif d'une distribution de déphasages des rayons lumineux diffusés par la surface, et l'établissement d'un score global à partir desdites valeurs,

  ∘ mettre en oeuvre un mécanisme d'apprentissage sur l'ensemble des scores globaux et l'ensemble des matériaux correspondants pour obtenir les plages correspondant à chaque matériau.

L'invention a également pour objet un procédé de contrôle biométrique, comprenant la mise en oeuvre du procédé la description qui précède sur une surface présentée par un individu lors du contrôle biométrique, le procédé comprenant en outre l'émission d'une alerte dans le cas où le matériau caractérisé ne correspond pas à un tissu biologique.

L'invention porte également sur un système de caractérisation d'un matériau comprenant :

- une source de lumière cohérente,
- un capteur d'image, et
- une unité de traitement, comprenant un processeur adapté pour :

  ∘ traiter une image d'une surface sur laquelle apparaissent des tavelures, ledit traitement comprenant le calcul d'une fonction d'autocorrélation de l'intensité lumineuse sur l'image,
  ∘ calculer, à partir desdites images, les valeurs de critères de caractérisation du matériau formant la surface, comprenant au moins un critère calculé à partir de la fonction d'autocorrélation, ledit calcul comprenant :

    ▪ pour chaque pixel de l'image, l'établissement d'une première matrice dont les valeurs propres indiquent le degré d'autocorrélation de l'intensité lumineuse dudit pixel par rapport aux pixels voisins, et
    ▪ le calcul de la valeur d'un critère de caractérisation comme la moyenne sur l'image de la trace d'une seconde matrice obtenue par la transformée en cosinus discrète de la première matrice,

et au moins un critère représentatif d'une distribution de déphasages des rayons lumineux diffusés par la surface, le calcul de ce critère comprenant le calcul d'une transformée en ondelettes de l'image, et le calcul de la valeur dudit critère parmi le groupe suivant :

- moyenne des phases des coefficients d'ondelettes sur l'image, ou
- écart-type des phases des coefficients d'ondelettes sur l'image, et

○ à partir des valeurs des critères, déterminer le matériau constituant la surface.

L'invention a enfin pour objet un produit programme d'ordinateur, comprenant des instructions de code pour la mise en oeuvre d'un procédé comprenant le traitement d'une image d'une surface pour calculer les valeurs de critères de caractérisation du matériau constitutif de la surface, ledit traitement comprenant :

○ le calcul d'une fonction d'autocorrélation de l'intensité lumineuse sur l'image et le calcul de la valeur d'au moins un critère de caractérisation établi à partir de ladite fonction, comprenant :

- pour chaque pixel de l'image, l'établissement d'une première matrice dont les valeurs propres indiquent le degré d'autocorrélation de l'intensité lumineuse dudit pixel par rapport aux pixels voisins, et
- le calcul de la valeur du critère de caractérisation comme la moyenne sur l'image de la trace d'une seconde matrice obtenue par la transformée en cosinus discrète de la première matrice, et

○ le calcul de la valeur d'au moins un critère représentatif d'une distribution de déphasages des rayons lumineux diffusés par la surface, comprenant le calcul d'une transformée en ondelettes de l'image, et le calcul de la valeur dudit critère parmi le groupe suivant :

- moyenne des phases des coefficients d'ondelettes sur l'image, ou
- écart-type des phases des coefficients d'ondelettes sur l'image,

lorsqu'il est exécuté par un processeur.

L'invention proposée permet de caractériser le matériau formant une surface par l'analyse des tavelures générées sur la surface par un faisceau lumineux cohérent. En effet, des matériaux différents génèrent des tavelures de propriétés différentes.

L'utilisation d'au moins un critère basé sur l'autocorrélation de l'intensité lumineuse et d'au moins un critère basé sur les déphasages des rayons lumineux diffusés par la surface permet d'analyser des caractéristiques différentes de matériaux et ainsi de discriminer entre un nombre élevé de matériaux.

En effet, l'autocorrélation de l'intensité lumineuse traduit un caractère diffusif plus ou moins élevé du matériau (permettant de discriminer par exemple entre silicone et papier ou plâtre). La distribution de déphasages caractérise quant à elle le relief de la surface puisque le déphasage varie en fonction de la hauteur du point de la surface sur lequel le rayon a été diffusé. Elle permet donc de caractériser les matériaux selon le critère du relief (permettant de discriminer par exemple entre papier et porcelaine).

De plus, les critères basés sur l'autocorrélation de l'intensité lumineuse de l'image peuvent eux-mêmes refléter des caractéristiques différentes des tavelures de l'image et peuvent encore améliorer la précision de la caractérisation du procédé. Par exemple, des critères établis à partir de la densité spectrale de puissance décrivent la distribution des tailles des figures de tavelures, tandis que d'autres critères peuvent décrire une distribution d'intensité des figures de tavelures.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1a représente schématiquement les principales étapes d'un procédé de caractérisation de matériau selon un mode de réalisation de l'invention.
- La figure 1b représente schématiquement les principales étapes d'élaboration de plages de valeurs de score global pour caractériser un matériau,

- La figure 2 représente schématiquement un système pour la mise en oeuvre du procédé de caractérisation de matériau.
- La figure 3 représente schématiquement un système d'identification ou d'authentification d'un individu.
- La figure 4 représente un exemple de résultats obtenus en utilisant deux critères basés sur la fonction d'autocorrélation dont un est obtenu à partir de la transformée en cosinus discrète de ladite fonction, et un critère représentatif de la distribution de déphasage.

DESCRIPTION DETAILLEE D'AU MOINS UN MODE DE MISE EN ŒUVRE DE L'INVENTION

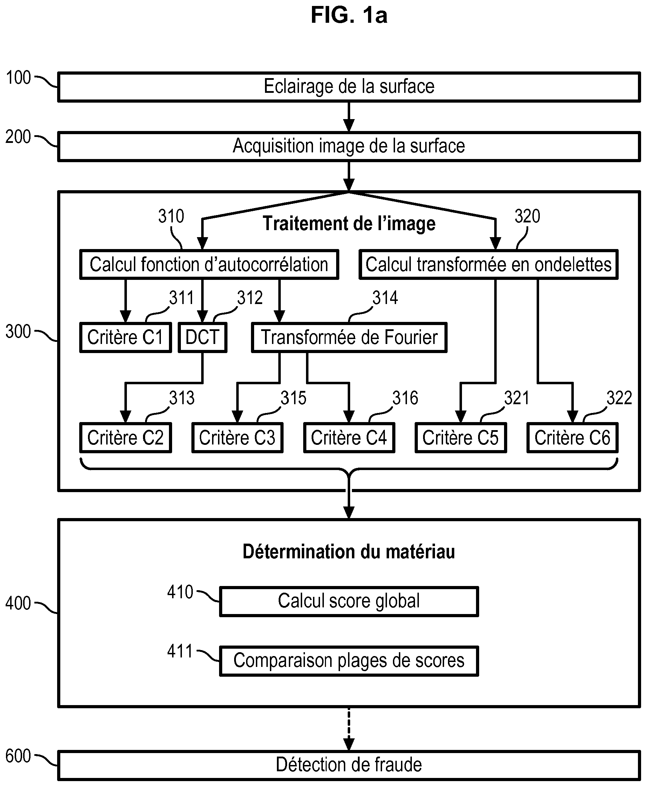

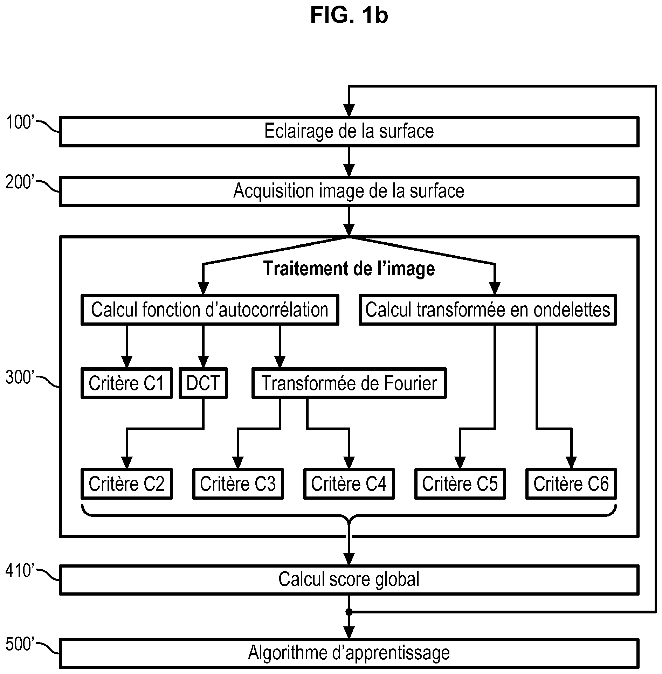

En référence à la figure 1, on a représenté schématiquement les principales étapes d'un procédé de caractérisation d'un matériau constitutif d'une surface S. Ce procédé peut être mis en oeuvre lors d'un contrôle biométrique, au cours duquel une image d'un trait biométrique formé sur la surface est acquise. Typiquement, un trait biométrique peut être une empreinte digitale ou la forme du visage.

Le procédé a alors pour objectif de déterminer le matériau dans lequel la surface est formée, par exemple si elle est formée d'un tissu biologique, typiquement de l'épiderme, ou d'un matériau tel que le papier ou la silicone, pouvant être utilisé pour des fraudes.

Le procédé comprend une première étape 100 d'éclairage de la surface avec un faisceau lumineux cohérent, c'est-à-dire dont les rayons lumineux présentent une longueur de cohérence avantageusement supérieure à 1cm, pour générer sur cette surface des tavelures.

Le procédé comprend en outre une deuxième étape 200, mise en oeuvre simultanément à la première, d'acquisition d'au moins une image de la surface S sur laquelle se trouvent les tavelures, de manière à ce que les tavelures apparaissent sur l'image.

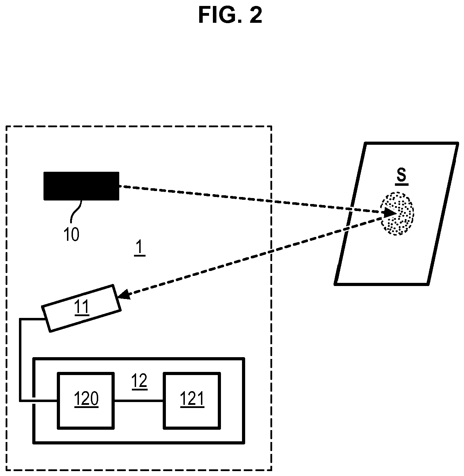

On a représenté sur la figure 2 un système 1 adapté pour la mise en oeuvre du procédé de caractérisation du matériau. Pour la mise en oeuvre de l'étape 100 d'éclairage, ce système comprend une source 10 de lumière cohérente.

Cette source est avantageusement un laser ou une diode laser monomode. Des sources lumineuses présentant une longueur de cohérence de l'ordre de quelques dizaines de micromètres, telles que les LED, ou de l'ordre de quelques micromètres, comme la lumière blanche, sont proscrites.

La source 10 lumineuse comprend avantageusement un polariseur adapté pour que le faisceau lumineux émis présente une polarisation rectiligne.

L'éclairage de la surface S par le faisceau lumineux fait apparaître sur cette surface des tavelures.

Pour la mise en oeuvre de l'étape 200 d'acquisition d'image(s), le système 1 comprend avantageusement un capteur d'image 11 sensible à la même longueur d'onde que la lumière émise par la source 10, et comprenant un polariseur (non représenté) parallèle ou perpendiculaire à la direction de polarisation du faisceau lumineux émis par la source 10.

Le capteur d'image peut par exemple être une caméra numérique ou un appareil photographique numérique.

Le système 1 comprend en outre de préférence une unité de traitement 12 comprenant typiquement au moins un processeur 120, et une mémoire 121, pour réaliser le traitement 300 de l'image décrit ci-après.

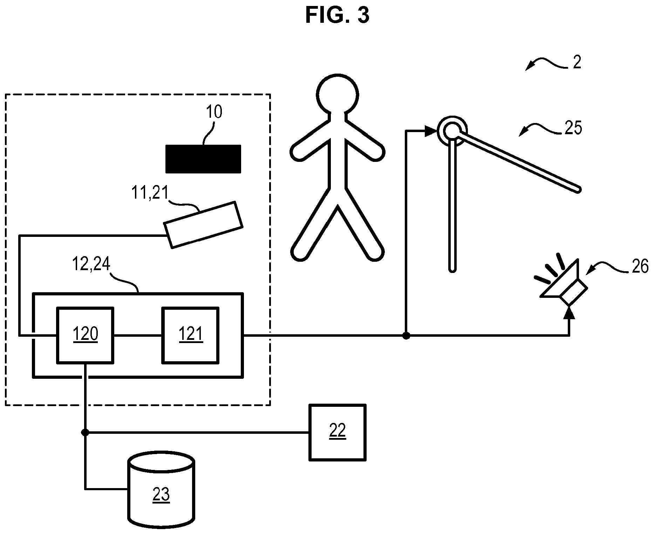

En référence à la figure 3, lorsque le procédé de caractérisation de matériau est mis en oeuvre lors d'un contrôle biométrique, le système 1 est avantageusement intégré à un système d'identification ou d'authentification 2.

Ce système 2 comporte un capteur de donnée biométrique 21, qui peut être distinct ou confondu avec le capteur d'image 11. Par exemple, lorsque le trait biométrique analysé est une empreinte digitale, le capteur d'image 11 peut être utilisé à la fois pour acquérir une image de l'empreinte et pour acquérir une image de tavelures générées sur le doigt où se trouve l'empreinte.

Le système d'identification ou d'authentification peut en outre comporter un lecteur 22 adapté pour obtenir, par lecture d'un document d'identité éventuellement numérique, une donnée biométrique de référence. Par exemple, la donnée biométrique peut être enregistrée dans une puce conservée dans le document d'identité. Le lecteur 22 est dans ce cas adapté pour accéder au contenu mémorisé dans la puce. Alternativement, dans le cas par exemple ou le trait biométrique analysé est la forme du visage, une photographie de l'individu peut figurer dans le document d'identité et le lecteur 22 peut être un capteur d'image adapté pour acquérir une image de cette photographie.

Alternativement, le système d'identification ou d'authentification peut comporter une base de données 23 mémorisant un ensemble de données biométriques de référence.

Ce système comporte en outre une unité de traitement 24, comprenant un processeur adapté pour comparer la donnée biométrique acquise sur l'individu avec une donnée de référence obtenue à partir d'un document d'identité ou une donnée enregistrée dans la base de données. Avantageusement l'unité de traitement 24 est confondue avec l'unité 12, c'est-à-dire que la même unité réalise l'authentification ou l'identification et la détection de fraude par caractérisation du matériau formant la surface du trait biométrique analysé.

Dans le cas où l'identification ou l'authentification est mise en oeuvre pour contrôler l'accès physique de l'individu à une zone, le système peut comprendre un dispositif de restriction d'accès 25 pouvant être contrôlé par l'unité de traitement pour bloquer ou autoriser l'accès de l'individu à la zone. Le dispositif 25 est typiquement une barrière, une porte pouvant être verrouillée ou déverrouillée, etc.

Le système comprend enfin une alarme 26 pouvant être activée par l'unité de traitement 24 en cas de détection de fraude. L'alarme 26 peut être par exemple un signal sonore ou un signal visuel comme l'allumage d'une lumière ou l'affichage, sur un écran, d'un message d'alerte.

De retour à la figure 1, le procédé de caractérisation d'un matériau comprend, une fois une image acquise des tavelures réalisées sur la surface, une étape 300 de traitement de la ou des image(s) acquise(s) pour calculer des valeurs de critères statistiques de caractérisation du matériau constitutif de la surface. Cette étape est avantageusement mise en oeuvre par l'unité de traitement 12 du système 1.

*Critères basés sur la fonction d'autocorrélation*

L'étape 300 de traitement est décrite dans la suite pour une image. Dans le cas où plusieurs images de la surface sont acquises à l'étape 200, les images peuvent être traitées de manière identique, et les valeurs calculées lors du traitement 300 sont dans ce cas avantageusement moyennées sur l'ensemble des images traitées.

Le traitement d'une image comprend le calcul 310 de la fonction d'autocorrélation spatiale de l'intensité lumineuse sur l'image. Cette fonction est un paramètre statistique qui fournit une indication sur la taille des grains dans les tavelures et sur leur distribution. La fonction d'autocorrélation s'écrit comme suit :

$$\rho(l,m) = \frac{\langle (I(x,y) - \langle I \rangle) I(x+l, y+m) - \langle I \rangle \rangle \rangle}{\sigma^2}$$

Où $\sigma$ est l'écart-type de l'intensité lumineuse dans l'image, $\langle I \rangle$ est la valeur moyenne dans l'image de l'intensité lumineuse I, (x,y) définit la position d'un pixel dans l'image, et I et m traduisent une distance dans les directions de x et y.

A partir de la fonction d'autocorrélation, différents critères statistiques peuvent être utilisés.

Avantageusement, les critères statistiques sont calculés uniquement sur les pixels de l'image correspondant à une figure de tavelure. Pour identifier ces pixels, on calcule de préférence la surface s couverte par les tavelures, qui est définie comme l'intégrale double de la fonction d'autocorrélation :

$$s = \int_{-\infty}^{+\infty} \int_{-\infty}^{+\infty} \rho(l,m)\, dl\, dm$$

Un premier critère de caractérisation de matériau peut être défini à partir d'une matrice A dite d'autocorrélation. Cette matrice A est obtenue en reformulant la fonction d'autocorrélation comme suit, pour de petits décalages I et m :

$$\rho(l,m) = \sum_{(x,y)\epsilon w} [I(x,y) - I(x+\Delta x, y + \Delta y)]^2$$

Où w est une fenêtre de pixels de l'image, par exemple une fenêtre de trois pixels de côté.

En appliquant l'expansion de Taylor à $I(x + \Delta x, y + \Delta y)$ on obtient :

$$I(x + \Delta x, y + \Delta y) = I(x,y) + \frac{\partial I}{\partial x}\Delta x + \frac{\partial I}{\partial y}\Delta y$$

En posant $I_x = \frac{\partial I}{\partial x}$ et $I_y = \frac{\partial I}{\partial y}$, on a :

$$I(x + \Delta x, y + \Delta y) = I(x,y) + I_x \Delta x + I_y \Delta y$$

Et en effectuant le changement de variable X=(x y), on obtient :

$$I(x,y) + I_x\Delta x + I_y\Delta y = I(X) + (\nabla I)\Delta X$$

Où $\nabla I = (I_x, I_y)^T$

D'où :

$$\rho(l,m) = \sum_w \left[ I_x\Delta x + I_y\Delta y \right]^2 = \sum_w \left[ I^2_x\Delta x + 2I_x I_y\Delta x\Delta y + I^2_y\Delta^2 y \right] = (\Delta X)^T A(X)(\Delta X)$$

Avec la matrice A d'autocorrélation définie en tout point (x,y) de l'image par :

$$A = \begin{bmatrix} \sum_w I^2_x & \sum_w I_x I_y \\ \sum_w I_x I_y & \sum_w I^2_y \end{bmatrix}$$

Les valeurs propres notées λ+ et λ- de cette matrice indiquent le degré d'autocorrélation d'un pixel (x,y) par rapport aux pixels voisins. Les valeurs de λ+ et λ- sur l'image permettent donc d'obtenir la distribution d'intensité dans le domaine w, qui n'est pas le même pour différents types de matériaux. En particulier, un tissu biologique présente une autocorrélation plus forte qu'un matériau utilisé pour une fraude.

Par conséquent un premier critère de caractérisation $C_1$ peut être défini à partir des valeurs propres de la matrice A. Avantageusement, ce critère est défini comme :

$$C_1 = \sqrt{\Lambda_+ + \Lambda_-}$$

Où $\Lambda_+$ est la moyenne des valeurs propres λ+ sur l'image, et $\Lambda_-$ est la moyenne des valeurs propres λ- sur l'image.

Ainsi le procédé comprend avantageusement une étape 311 de calcul de la valeur du critère $C_1$ pour l'image acquise à l'étape 200.

La valeur d'un deuxième critère $C_2$ est calculée à partir de la matrice A, possiblement en cumul avec la valeur du première critère de caractérisation $C_1$.

Pour calculer la valeur de ce deuxième critère, le procédé comprend une étape supplémentaire 312 de calcul de la transformée en cosinus discrète (ou DCT pour Discrète Cosine Transform) de la matrice d'autocorrélation A.

Cette étape modifie la matrice A en une matrice A' de Toeplitz, c'est-à-dire une matrice dont les coefficients situés sur chaque diagonale sont les mêmes. En l'espèce la matrice A' est donc de la forme :

$$\begin{bmatrix} a & b \\ c & a \end{bmatrix}$$

De ce fait, les valeurs propres de la matrice A' correspondent au minimum et maximum de puissance du spectre de l'intensité I au pixel (x,y) ; les valeurs propres de A' sont maximales quand l'autocorrélation dans l'image est forte.

On peut donc définir le deuxième critère $C_2$ à partir de la trace de la matrice A', qui est une approximation de la somme des valeurs propres de A'. Ce critère peut par exemple être la moyenne sur l'image de la trace de A'. Plus cette moyenne est élevée, et plus l'autocorrélation dans l'image est élevée.

Ainsi le procédé comprend le calcul 313 de la valeur du critère $C_2$ à partir de l'image acquise à l'étape 200.

Alternativement ou en cumul aux critères précédents, un critère de caractérisation établi à partir de la fonction d'autocorrélation peut être fourni par la transformée de Fourier de la fonction d'autocorrélation. Dans ce cas, l'étape de traitement 300 comprend une étape 314 de calcul de la transformée de Fourier de la fonction d'autocorrélation de l'intensité lumineuse, notée F($\rho(l,m)$).

Or, d'après le théorème de Weiner-Khinchin, la transformée de Fourier de la fonction d'autocorrélation est égale à la densité spectrale de puissance de l'intensité :

$$F\left(\rho(l,m)\right) = DSP(I)$$

La densité spectrale de puissance décrit la distribution des tailles des tâches dans la figure formée par les tavelures. Elle est donc exploitée pour caractériser les matériaux.

On définit un troisième critère de corrélation $C_3$ comme l'écart-type de la densité spectrale de puissance de l'intensité sur l'image, qui est calculé comme l'écart-type de la transformée de Fourier de la fonction d'autocorrélation sur l'image.

On définit un quatrième critère de corrélation $C_4$ comme la moyenne de la densité spectrale de puissance de l'intensité sur l'image, qui est calculée comme la moyenne de la transformée de Fourier de la fonction d'autocorrélation sur l'image.

Le procédé comprend avantageusement une étape de calcul de la valeur d'au moins un critère établi à partir de la transformée de Fourier, soit le critère $C_3$ (étape 315), soit le critère $C_4$ (étape 316).

Le ou les critères décrits ci-avant établis à partir de la fonction d'autocorrélation sont avantageusement combinés à au moins un critère supplémentaire représentatif de la distribution des déphasages des rayons lumineux diffusés par la surface.

En d'autres termes, le procédé comprend le calcul de la valeur d'au moins un des critères décrits ci-avant, et de la valeur d'au moins un critère défini ci-après relatif au déphasage des rayons lumineux.

*Critères de distribution de déphasages*

L'étape 300 de traitement de l'image comprend une étape 320 de la transformée en ondelettes de l'image afin de caractériser les déphasages des rayons lumineux diffusés par la surface.

En effet, les défauts de surface induisent sur les rayons lumineux des déphasages qui sont fonction des hauteurs des défauts.

On peut donc exprimer le champ U en un point donné P comme une somme discrète des contributions des rayons lumineux provenant d'un ensemble de N défauts, les rayons lumineux provenant d'un même défaut présentant tous le mêmes déphasage $\varphi_n$ :

$$U(P) = \sum_{n=1}^{N} a_n e^{i\varphi_n}$$

Où $a_n$ désigne l'amplitude du champ des faisceaux lumineux diffusés par le défaut n.

Lorsque le nombre de défauts N est important, le théorème de la limite centrale s'applique à l'équation précédente, et le champ en un point d'observation U(P) suit une loi gaussienne ; les tavelures sont qualifiées de gaussiennes.

La transformée en ondelettes 320 de l'image permet d'estimer les valeurs du champ $a_n$ et du déphasage $\varphi_n$ en choisissant une échelle e adaptée pour que le nombre de défauts N considéré dans l'image soit suffisamment important pour que le champ suive une loi gaussienne.

Pour modéliser le champ gaussien, en adaptant les travaux de Mallat et al. dans la publication Characterization of signals from multiscale edges, IEEE Transaction on Pattern Analysis and Machine Intelligence, 14 : 710-732, 1992, on définit une fonction gaussienne $\theta(x,y)$, et deux fonctions d'ondelettes $\psi^1$ et $\psi^2$ comme étant respectivement les dérivées en x et en y de la fonction $\theta$ :

$$\psi^1(x,y) = \frac{\partial \theta(x,y)}{\partial x}$$

$$\psi^2(x,y) = \frac{\partial \theta(x,y)}{\partial y}$$

Pour une image présentant une intensité lumineuse $I(x,y) \in L^2(\mathbb{R}^2)$, la transformée en ondelettes à l'échelle e de l'intensité lumineuse I de l'image a deux composantes :

$$D_e^1 = I * \psi_e^{\ 1}(x,y) = I * \left( e \frac{\partial \theta_e(x,y)}{\partial x} \right) = e \frac{\partial(\theta_e * I)(x,y)}{\partial x}$$

$$D_e^2 = I * \psi_e^2(x,y) = I * \left( e \frac{\partial \theta_e(x,y)}{\partial y} \right) = e \frac{\partial (\theta_e * I)(x,y)}{\partial y}$$

Ainsi à une échelle e, l'amplitude de champs en (x,y) est définie par :

$$a = \sqrt{(D_e^1)^2 + (D_e^2)^2}$$

Et la phase est définie par :

$$\varphi = \tan^{-1}\left( \frac{D_e^2}{D_e^1} \right)$$

On définit alors un cinquième critère de corrélation $C_5$ comme l'écart-type des phases des coefficients d'ondelettes sur l'image.

On définit enfin un sixième critère de corrélation $C_6$ comme la moyenne des phases des coefficients d'ondelettes sur l'image.

Le procédé comprend donc le calcul de la valeur d'au moins l'un des critères $C_5$ (étape 321), $C_6$ (étape 322), ou des deux critères.

Ainsi lors d'une étape 400, le processeur détermine la nature du matériau à partir des valeurs des critères calculées à l'étape précédente, et notamment à partir d'au moins l'un des quatre critères obtenus à partir de la fonction d'autocorrélation de l'intensité lumineuse, et d'au moins l'un des deux critères présentés obtenus à partir de la transformée en ondelettes de l'intensité lumineuse de l'image.

De préférence, pour plus de précision dans la caractérisation du matériau, les valeurs de tous les critères décrits ci-avant sont calculées et prises en compte dans l'étape 400.

L'étape de caractérisation 400 du matériau comprend d'abord l'agrégation 410 par le processeur 120 des valeurs des critères obtenues pour former un score global. Le score global peut par exemple être un vecteur comprenant l'ensemble des valeurs des critères. Alternativement, le score global peut être une combinaison linéaire des valeurs des critères ou, plus préférablement, un polynôme évalué en ces valeurs.

Puis, le processeur 120 compare 411 le score global obtenu à un ensemble de plages prédéterminées correspondant à des matériaux respectifs. D'après la plage dans laquelle se trouve le score global pour l'image analysée, on peut identifier le matériau correspondant.

De préférence, les plages de scores correspondant aux matériaux sont élaborées préalablement lors d'une étape 500 représentée sur la figure 1b. Pour ce faire, des étapes analogues à celles décrites ci-avant d'éclairage 100', d'acquisition d'une image de tavelures 200', de traitement de l'image 300', et de calcul d'un score global 410', sont mises en oeuvre sur un grand nombre de surfaces, chaque surface étant formée en un matériau déterminé. Par exemple, des surfaces réalisées dans des matériaux tels que de l'épiderme, de la peau, de la cire d'abeille, de la colle, de la gélatine, du latex, de la pâte à modeler, de la porcelaine, de la silicone, etc., sont analysées en vue d'établir des plages de score correspondantes.

Les scores obtenus pour chaque surface sont ensuite agrégés au cours de l'étape 500 par un algorithme d'apprentissage, par exemple de type SVM (séparateurs à vaste marge, ou en anglais Support Vector Machine), analyse en composantes principales, ou autres, pour obtenir les plages de scores correspondant à chaque matériau.

Avantageusement, l'algorithme d'apprentissage élabore un polynôme permettant de séparer au mieux les matériaux testés. Ainsi l'évaluation ultérieure du même polynôme à partir des valeurs des critères calculées pour un matériau candidat permet de déterminer avec certitude la nature du matériau candidat.

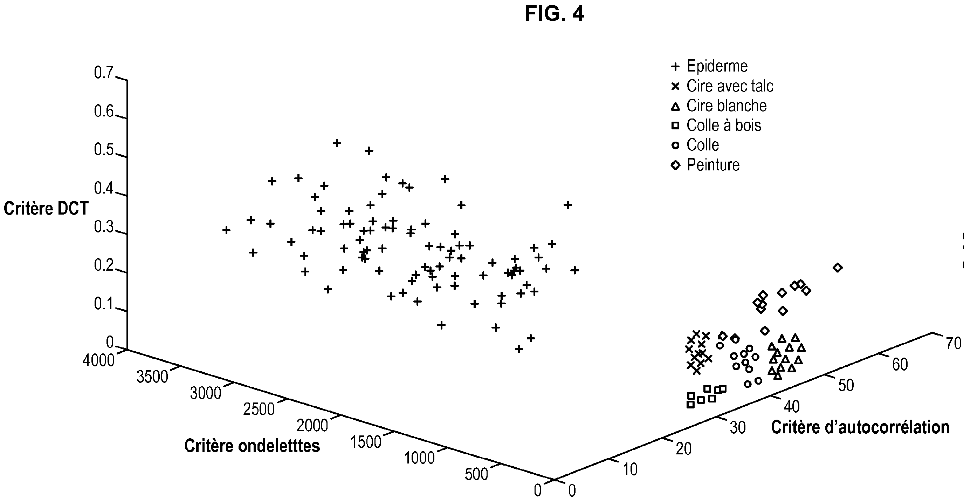

En référence à la figure 4, on a représenté des exemples de scores globaux représentés pour un ensemble de matériaux, les scores étant établis à partir d'un critère calculé à partir de la transformée en ondelettes, un critère calculé à partir de la transformée en cosinus discrète de la fonction d'autocorrélation, et le critère $C_1$. On constate que l'utilisation cumulée de plusieurs critères dont un critère calculé à partir de la transformée en ondelettes permet non seulement de distinguer l'épiderme de matériaux frauduleux, mais encore de distinguer les matériaux frauduleux entre eux.

De retour à la figure 1, lorsque le procédé décrit ci-avant est mis en oeuvre dans le cadre d'un contrôle biométrique, il comprend avantageusement une étape 600 de détection de fraude et d'émission d'une alerte, dans le cas où le matériau identifié n'est pas un tissu biologique, notamment pas de l'épiderme.

Ceci implique que l'unité de traitement 24 commande l'activation de l'alarme 26, par exemple par émission d'un signal visuel (signal lumineux, affichage d'un message d'alerte) ou sonore, et commande le verrouillage (ou le maintien à l'état fermé) du dispositif de restriction d'accès 25.

Si au contraire le matériau est identifié comme un tissu biologique dont est constitué le trait biométrique sur lequel l'identification ou l'authentification est basée, le procédé peut continuer classiquement en procédé d'identification ou d'authentification mis en oeuvre par le système 2 par comparaison d'une donnée biométrique acquise sur l'individu avec une donnée de référence.

**Revendications**

1. Procédé de caractérisation d'un matériau dans lequel est formée une surface, comprenant les étapes consistant à :

    - projeter (100) sur la surface un faisceau lumineux cohérent, pour générer sur ladite surface des tavelures résultant d'interférences des rayons lumineux diffusés par ladite surface,
    - acquérir (200) une image de ladite surface sur laquelle apparaissent les tavelures,
    - traiter (300) ladite image pour calculer les valeurs de critères de caractérisation du matériau (C1, ..., C6), et
    - à partir desdits critères, déterminer (400) le matériau constituant la surface,

    dans lequel l'étape de traitement (300) de l'image comprend :

    - le calcul (310) d'une fonction d'autocorrélation de l'intensité lumineuse sur l'image et le calcul de la valeur d'au moins un critère de caractérisation (C1, ..., C4) établi à partir de ladite fonction d'autocorrélation, ledit calcul comprenant :

        ◦ pour chaque pixel de l'image, l'établissement d'une première matrice dont les valeurs propres indiquent le degré d'autocorrélation de l'intensité lumineuse dudit pixel par rapport aux pixels voisins, et
        ◦ le calcul de la valeur du critère ($C_2$) de caractérisation comme la moyenne sur l'image de la trace d'une seconde matrice obtenue par la transformée en cosinus discrète de la première matrice, et

    - le calcul de la valeur d'au moins un critère représentatif ($C_5$, $C_6$) d'une distribution de déphasages des rayons lumineux diffusés par la surface, ledit calcul comprenant le calcul (420) d'une transformée en ondelettes de l'image, et le calcul de la valeur dudit critère ($C_5$, $C_6$) parmi le groupe suivant :

        ◦ moyenne ($C_6$) des phases des coefficients d'ondelettes sur l'image, ou
        ◦ écart-type ($C_5$) des phases des coefficients d'ondelettes sur l'image.

2. Procédé de caractérisation selon la revendication précédente, dans lequel le calcul de la valeur d'au moins un critère de caractérisation à partir de la fonction d'autocorrélation de l'intensité lumineuse comprend en outre le calcul de la valeur d'au moins un critère ($C_3$, $C_4$) établi à partir de la transformée de Fourier de la fonction d'autocorrélation.

3. Procédé de caractérisation selon la revendication 2, dans lequel le critère de caractérisation établi à partir de la transformée de Fourier de la fonction d'autocorrélation comprend au moins l'un parmi le groupe suivant :

    - moyenne ($C_4$) de la transformée de Fourier de la fonction d'autocorrélation sur l'image, ou
    - écart-type ($C_3$) de la transformée de Fourier de la fonction d'autocorrélation sur l'image.

4. Procédé de caractérisation selon l'une des revendications précédentes, dans lequel le traitement de l'image comprend le calcul de la valeur d'un critère de caractérisation ($C_1$) égal à la racine carrée de la somme des valeurs propres moyennes de la première matrice sur l'image.

5. Procédé de caractérisation selon l'une des revendications précédentes, dans lequel l'étape de détermination (400) du matériau constituant la surface comprend le calcul (411) d'un score global à partir des valeurs des critères, et la classification du matériau par comparaison (412) du score global avec une pluralité de plages prédéterminées correspondant à des matériaux respectifs.

6. Procédé de caractérisation selon la revendication 5, comprenant en outre une étape préliminaire (500) d'élaboration des plages de scores, ladite étape comprenant :

- pour une pluralité de surfaces formées dans des matériaux déterminés, mettre en oeuvre des étapes :

  ◦ de projection sur la surface d'un faisceau lumineux cohérent, pour générer sur ladite surface des tavelures résultant d'interférences des rayons lumineux diffusés par ladite surface,
  ◦ d'acquisition d'une image de ladite surface sur laquelle apparaissent les tavelures,
  ◦ de traitement de ladite image pour calculer au moins un critère de caractérisation du matériau, ledit traitement comprenant le calcul d'une fonction d'autocorrélation de l'intensité lumineuse sur l'image et le calcul de la valeur d'au moins un critère à partir de ladite fonction, le calcul de la valeur d'au moins un critère représentatif d'une distribution de déphasages des rayons lumineux diffusés par la surface, et l'établissement d'un score global à partir desdites valeurs,

- mettre en oeuvre un mécanisme d'apprentissage sur l'ensemble des scores globaux et l'ensemble des matériaux correspondants pour obtenir les plages correspondant à chaque matériau.

7. Procédé de contrôle biométrique, comprenant la mise en oeuvre du procédé selon l'une des revendications précédentes sur une surface présentée par un individu lors du contrôle biométrique, le procédé comprenant en outre l'émission d'une alerte dans le cas où le matériau caractérisé ne correspond pas à un tissu biologique.

8. Système (1) de caractérisation d'un matériau comprenant :

- une source de lumière (10) cohérente,
- un capteur d'image (11), et
- une unité de traitement (12), comprenant un processeur (120) adapté pour :

  ◦ traiter une image d'une surface sur laquelle apparaissent des tavelures, ledit traitement comprenant le calcul d'une fonction d'autocorrélation de l'intensité lumineuse sur l'image,
  ◦ calculer, à partir desdites images, les valeurs de critères de caractérisation du matériau formant la surface, comprenant au moins un critère de caractérisation calculé à partir de la fonction d'autocorrélation, ledit calcul comprenant :

    ▪ pour chaque pixel de l'image, l'établissement d'une première matrice dont les valeurs propres indiquent le degré d'autocorrélation de l'intensité lumineuse dudit pixel par rapport aux pixels voisins, et
    ▪ le calcul de la valeur d'un critère ($C_2$) de caractérisation comme la moyenne sur l'image de la trace d'une seconde matrice obtenue par la transformée en cosinus discrète de la première matrice,

  et au moins un critère représentatif d'une distribution de déphasages des rayons lumineux diffusés par la surface, le calcul dudit critère comprenant le calcul (420) d'une transformée en ondelettes de l'image, et le calcul de la valeur dudit critère ($C_5$, $C_6$) parmi le groupe suivant :

    ▪ moyenne ($C_6$) des phases des coefficients d'ondelettes sur l'image, ou
    ▪ écart-type ($C_5$) des phases des coefficients d'ondelettes sur l'image, et

  ◦ à partir des valeurs des critères, déterminer le matériau constituant la surface.

9. Produit programme d'ordinateur, comprenant des instructions de code pour la mise en oeuvre d'un procédé comprenant le traitement (300) d'une image d'une surface pour calculer les valeurs de critères de caractérisation du matériau constitutif de la surface, ledit traitement comprenant :

- le calcul (310) d'une fonction d'autocorrélation de l'intensité lumineuse sur l'image et le calcul de la valeur d'au moins un critère (C1, ..., C4) de caractérisation établi à partir de ladite fonction, ledit calcul comprenant:

  ◦ pour chaque pixel de l'image, l'établissement d'une première matrice dont les valeurs propres indiquent le degré d'autocorrélation de l'intensité lumineuse dudit pixel par rapport aux pixels voisins, et
  ◦ le calcul de la valeur du critère ($C_2$) de caractérisation comme la moyenne sur l'image de la trace d'une seconde matrice obtenue par la transformée en cosinus discrète de la première matrice, et

- le calcul de la valeur d'au moins un critère représentatif (C5, C6) d'une distribution de déphasages des rayons lumineux diffusés par la surface, comprenant le calcul (420) d'une transformée en ondelettes de l'image, et le calcul de la valeur dudit critère (C5, C6) parmi le groupe suivant :

  ◦ moyenne (C6) des phases des coefficients d'ondelettes sur l'image, ou
  ◦ écart-type (C5) des phases des coefficients d'ondelettes sur l'image, lorsqu'il est exécuté par un processeur (120).

**Patentansprüche**

**1.** Verfahren zur Charakterisierung eines Materials, aus dem eine Fläche gebildet wird, das die Schritte enthält, die darin bestehen:

- Projizieren (100) eines kohärenten Lichtstrahls auf die Fläche, um auf der Fläche Speckles zu erzeugen, die aus Interferenzen der von der Fläche gestreuten Lichtstrahlen resultieren,
- Erfassen (200) eines Bilds der Fläche, auf dem die Speckles erscheinen,
- Verarbeiten (300) des Bilds, um die Werte von Charakterisierungskriterien des Materials (C1, ..., C6) zu berechnen, und
- ausgehend von den Kriterien, Bestimmen (400) des die Fläche bildenden Materials,

wobei der Schritt der Verarbeitung (300) des Bilds enthält:

- die Berechnung (310) einer Autokorrelationsfunktion der Lichtstärke auf dem Bild und die Berechnung des Werts mindestens eines ausgehend von der Autokorrelationsfunktion erstellten Charakterisierungskriteriums (C1, ..., C4), wobei die Berechnung enthält:

  ◦ für jedes Pixel des Bilds, die Erstellung einer ersten Matrix, deren Eigenwerte den Autokorrelationsgrad der Lichtstärke des Pixels bezüglich der benachbarten Pixel anzeigen, und
  ◦ die Berechnung des Werts des Charakterisierungskriteriums ($C_2$) als der Mittelwert auf dem Bild der Spur einer zweiten Matrix, die durch die diskrete Kosinustransformation der ersten Matrix erhalten wird, und

- die Berechnung des Werts mindestens eines repräsentativen Kriteriums ($C_5$, $C_6$) einer Verteilung von Phasenverschiebungen der von der Fläche gestreuten Lichtstrahlen, wobei die Berechnung die Berechnung (420) einer Wavelet-Transformation des Bilds und die Berechnung des Werts des Kriteriums ($C_5$, $C_6$) unter der folgenden Gruppe enthält:

  ◦ Mittelwert ($C_6$) der Phasen der Wavelet-Koeffizienten auf dem Bild, oder
  ◦ Standardabweichung ($C_5$) der Phasen der Wavelet-Koeffizienten auf dem Bild.

**2.** Charakterisierungsverfahren nach dem vorhergehenden Anspruch, wobei die Berechnung des Werts mindestens eines Charakterisierungskriteriums ausgehend von der Autokorrelationsfunktion der Lichtstärke außerdem die Berechnung des Werts mindestens eines Kriteriums ($C_3$, $C_4$) enthält, das ausgehend von der Fourier-Transformation der Autokorrelationsfunktion erstellt wird.

**3.** Charakterisierungsverfahren nach Anspruch 2, wobei das ausgehend von der Fourier-Transformation der Autokorrelationsfunktion erstellte Charakterisierungskriterium mindestens eines aus der folgenden Gruppe enthält:

- Mittelwert ($C_4$) der Fourier-Transformation der Autokorrelationsfunktion auf dem Bild, oder
- Standardabweichung ($C_3$) der Fourier-Transformation der Autokorrelationsfunktion auf dem Bild.

**4.** Charakterisierungsverfahren nach einem der vorhergehenden Ansprüche, wobei die Verarbeitung des Bilds die Berechnung des Werts eines Charakterisierungskriteriums ($C_1$) gleich der Quadratwurzel der Summe der mittleren Eigenwerte der ersten Matrix auf dem Bild enthält.

**5.** Charakterisierungsverfahren nach einem der vorhergehenden Ansprüche, wobei der Bestimmungsschritt (400) des die Fläche bildenden Materials die Berechnung (411) eines Gesamtscores ausgehend von den Werten der Kriterien und die Klassifizierung des Materials durch Vergleich (412) des Gesamtscores mit einer Vielzahl vorbestimmter Bereiche entsprechend jeweiligen Materialien enthält.

**6.** Charakterisierungsverfahren nach Anspruch 5, das außerdem einen vorhergehenden Schritt (500) der Ausarbeitung der Score-Bereiche enthält, wobei der Schritt enthält:

- für eine Vielzahl von in bestimmten Materialien gebildeten Flächen, Durchführung der Schritte:

◦ Projektion eines kohärenten Lichtstrahls auf die Fläche, um auf der Fläche Speckles zu erzeugen, die aus Interferenzen von durch die Fläche gestreuten Lichtstrahlen resultieren,
◦ Erfassung eines Bilds der Fläche, auf der die Speckles erscheinen,
◦ Verarbeitung des Bilds, um mindestens ein Charakterisierungskriterium des Materials zu berechnen, wobei die Verarbeitung die Berechnung einer Autokorrelationsfunktion der Lichtstärke auf dem Bild und die Berechnung des Werts mindestens eines Kriteriums ausgehend von der Funktion, die Berechnung des Werts mindestens eines für eine Verteilung von Phasenverschiebungen der von der Fläche gestreuten Lichtstrahlen repräsentativen Kriteriums und die Erstellung eines Gesamtscores ausgehend von den Werten enthält,

- Durchführung eines Lernmechanismus an der Gesamtheit der Gesamtscores und der Gesamtheit der entsprechenden Materialien, um die jedem Material entsprechenden Bereiche zu erhalten.

**7.** Biometrisches Kontrollverfahren, das die Durchführung des Verfahrens nach einem der vorhergehenden Ansprüche auf einer von einer Person bei der biometrischen Kontrolle präsentierten Fläche enthält, wobei das Verfahren außerdem das Aussenden eines Alarms in dem Fall enthält, in dem das charakterisierte Material nicht einem biologischen Gewebe entspricht.

**8.** System (1) zur Charakterisierung eines Materials, das enthält:

- eine Quelle kohärenten Lichts (10),
- einen Bildsensor (11), und
- eine Verarbeitungseinheit (12), die einen Prozessor (120) enthält, der geeignet ist, um:

◦ ein Bild einer Fläche zu verarbeiten, auf dem Speckles erscheinen, wobei die Verarbeitung die Berechnung einer Autokorrelationsfunktion der Lichtstärke auf dem Bild enthält,
◦ ausgehend von den Bildern, Berechnen der Werte von Charakterisierungskriterien des die Fläche bildenden Materials, die mindestens ein Charakterisierungskriterium enthalten, das ausgehend von der Autokorrelationsfunktion berechnet wird, wobei die Berechnung enthält:

• für jedes Pixel des Bilds, die Erstellung einer ersten Matrix, deren Eigenwerte den Autokorrelationsgrad der Lichtstärke des Pixels bezüglich der benachbarten Pixel anzeigen, und
• die Berechnung des Werts eines Charakterisierungskriteriums ($C_2$) als der Mittelwert auf dem Bild der Spur einer zweiten Matrix, die durch die diskrete Kosinustransformation der ersten Matrix erhalten wird,

und mindestens ein Kriterium repräsentativ für eine Verteilung von Phasenverschiebungen der von der Fläche gestreuten Lichtstrahlen, wobei die Berechnung des Kriteriums die Berechnung (420) einer Wavelet-Transformation des Bilds und die Berechnung des Werts des Kriteriums ($C_5$, $C_6$) aus der folgenden Gruppe enthält:

• Mittelwert ($C_6$) der Phasen der Wavelet-Koeffizienten auf dem Bild, oder
• Standardabweichung ($C_5$) der Phasen der Wavelet-Koeffizienten auf dem Bild, und

◦ ausgehend von den Werten der Kriterien, Bestimmen des die Fläche bildenden Materials.

**9.** Computerprogrammprodukt, das Codeanweisungen zur Durchführung eines Verfahrens enthält, das die Verarbeitung (300) eines Bilds einer Fläche enthält, um die Werte von Charakterisierungskriterien des die Fläche bildenden Materials zu berechnen, wobei die Verarbeitung enthält:

- die Berechnung (310) einer Autokorrelationsfunktion der Lichtstärke auf dem Bild und die Berechnung des Werts mindestens eines Charakterisierungskriteriums ($C_1$, ..., $C_4$), das ausgehend von der Funktion erstellt wird, wobei die Berechnung enthält:

◦ für jedes Pixel des Bilds, die Erstellung einer ersten Matrix, deren Eigenwerte den Autokorrelationsgrad der Lichtstärke des Pixels bezüglich der benachbarten Pixel anzeigen, und
◦ die Berechnung des Werts des Charakterisierungskriteriums ($C_2$) als der Mittelwert auf dem Bild der Spur einer durch die diskrete Kosinustransformation der ersten Matrix erhaltenen zweiten Matrix, und

- die Berechnung des Werts mindestens eines repräsentativen Kriteriums ($C_5$, $C_6$) einer Verteilung von Phasenverschiebungen der von der Fläche gestreuten Lichtstrahlen, die die Berechnung (420) einer Wavelet-Transformation des Bilds und die Berechnung des Werts des Kriteriums ($C_5$, $C_6$) aus der folgenden Gruppe enthält:

◦ Mittelwert ($C_6$) der Phasen der Wavelet-Koeffizienten auf dem Bild, oder
◦ Standardabweichung ($C_5$) der Phasen der Wavelet-Koeffizienten auf dem Bild,

wenn es von einem Prozessor (120) ausgeführt wird.

**Claims**

1. Method for characterizing a material in which is formed a surface, comprising steps of:

- projecting (100) onto the surface a coherent light beam, to generate on said surface speckles resulting from interference of light rays scattered by said surface,
- acquiring (200) an image of said surface, in which the speckles appear,
- processing (300) said image to compute the values of criteria ($C_1$, ..., $C_6$) characterizing the material, and
- based on said criteria, determining (400) the material from which the surface is made,

wherein the step (300) of processing the image comprises:

- computation (310) of an autocorrelation function of the light intensity in the image and computation of the value of at least one characterizing criteria ($C_1$, ..., $C_4$) established based on said autocorrelation function, said computation comprising:

◦ for each pixel of the image, establishing a first matrix the eigenvalues of which indicate the degree of autocorrelation of the light intensity of said pixel with respect to the neighbouring pixels, and
◦ computation of the value of the characterizing criterion ($C_2$) as the mean in the image of the trace of a second matrix obtained by discrete cosine transform of the first matrix, and

- computation of the value of at least one criterion ($C_5$, $C_6$) representative of a distribution of phase shifts of the light rays scattered by the surface, said computation comprising computation (420) of a wavelet transform of the image, and computation of the value of said criterion ($C_5$, $C_6$) from among the following group:

◦ mean ($C_6$) of the phases of the wavelet coefficients in the image, or
◦ standard deviation ($C_5$) of the phases of the wavelet coefficients in the image.

2. Characterizing method according to the preceding claim, wherein the computation of the value of at least one characterizing criterion based on the autocorrelation function of the light intensity further comprises computation of the value of at least one criterion ($C_3$, $C_4$) established based on the Fourier transform of the autocorrelation function.

3. Characterizing method according to Claim 2, wherein the characterizing criterion established based on the Fourier transform of the autocorrelation function comprises at least one from among the following group:

- mean ($C_4$) of the Fourier transform of the autocorrelation function in the image, or
- standard deviation ($C_3$) of the Fourier transform of the autocorrelation function in the image.

4. Characterizing method according to one of the preceding claims, wherein processing the image comprises computation of the value of a characterizing criterion ($C_1$) equal to the square root of the sum of the mean eigenvalues of the first matrix in the image.

5. Characterizing method according to one of the preceding claims, wherein the step (400) of determining the material from which the surface is made comprises computation (411) of an overall score based on the values of the criteria, and classifying the material by comparing (412) the overall score with a plurality of predetermined ranges corresponding to respective materials.

6. Characterizing method according to Claim 5, further comprising a preliminary step (500) of generating ranges of scores, said step comprising:

   - for a plurality of surfaces made of determined materials, implementing steps:

     ∘ of projecting onto the surface a coherent light beam, to generate on said surface speckles resulting from interference of light rays scattered by said surface,
     ∘ of acquiring an image of said surface, in which the speckles appear,
     ∘ of processing said image to compute at least one criterion characterizing the material, said processing comprising computation of an autocorrelation function of the light intensity in the image and computation of the value of at least one criterion based on said function, computation of the value of at least one criterion representative of a distribution of phase shifts of the light rays scattered by the surface, and establishment of an overall score based on said values,

   - implementing a learning mechanism on the set of all of the overall scores and the set of all of the corresponding materials to obtain the ranges corresponding to each material.

7. Method for performing a biometric check, comprising implementing the method according to one of the preceding claims on a surface presented by an individual during the biometric check, the method further comprising generating an alert in the case where the characterized material does not correspond to a biological tissue.

8. System (1) for characterizing a material comprising:

   - a coherent light source (10),
   - an image sensor (11), and
   - a processing unit (12), comprising a processor (120) suitable for:

     ∘ processing an image of a surface, in which speckles appear, said processing comprising computation of an autocorrelation function of the light intensity in the image,
     ∘ computing, based on said images, of the values of criteria characterizing the material forming the surface, comprising at least one characterizing criterion computed based on the autocorrelation function, said computation comprising:

       ▪ for each pixel of the image, establishing a first matrix the eigenvalues of which indicate the degree of autocorrelation of the light intensity of said pixel with respect to the neighbouring pixels, and
       ▪ computation of the value of a characterizing criterion ($C_2$) as the mean in the image of the trace of a second matrix obtained by discrete cosine transform of the first matrix,

     and at least one criterion representative of a distribution of phase shifts of the light rays scattered by the surface, the computation of said criterion comprising computation (420) of a wavelet transform of the image, and computation of the value of said criterion ($C_5$, $C_6$) from among the following group:

       ▪ mean ($C_6$) of the phases of the wavelet coefficients in the image, or
       ▪ standard deviation ($C_5$) of the phases of the wavelet coefficients in the image, and

     ∘ based on the values of the criteria, determining the material from which the surface is made.

9. Computer program product, comprising code instructions for implementing a method comprising processing (300) an image of a surface to compute the values of criteria characterizing the material from which the surface is made, said processing comprising:

   - computation (310) of an autocorrelation function of the light intensity in the image and computation of the value of at least one characterizing criteria ($C_1$, ..., $C_4$) established based on said function, said computation comprising:

     ◦ for each pixel of the image, establishing a first matrix the eigenvalues of which indicate the degree of autocorrelation of the light intensity of said pixel with respect to the neighbouring pixels, and
     ◦ computation of the value of the characterizing criterion ($C_2$) as the mean in the image of the trace of a second matrix obtained by discrete cosine transform of the first matrix, and

- computation of the value of at least one criterion ($C_5$, $C_6$) representative of a distribution of phase shifts of the light rays scattered by the surface, comprising computation (420) of a wavelet transform of the image, and computation of the value of said criterion ($C_5$, $C_6$) from among the following group:

     ◦ mean ($C_6$) of the phases of the wavelet coefficients in the image, or
     ◦ standard deviation ($C_5$) of the phases of the wavelet coefficients in the image,

when it is executed by a processor (120).

# FIG. 1a

100 — Eclairage de la surface

200 — Acquisition image de la surface

**Traitement de l'image**

310 | **Calcul fonction d'autocorrélation** | 320 | **Calcul transformée en ondelettes**

300 —

311 | Critère C1 | 312 | DCT | 314 | Transformée de Fourier

313 | Critère C2 | 315 | Critère C3 | 316 | Critère C4 | 321 | Critère C5 | 322 | Critère C6

**Détermination du matériau**

400 —

410 — Calcul score global

411 — Comparaison plages de scores

600 — Détection de fraude

# FIG. 1b

**100'** Eclairage de la surface

**200'** Acquisition image de la surface

**300'** Traitement de l'image

Calcul fonction d'autocorrélation  |  Calcul transformée en ondelettes

Critère C1  |  DCT  |  Transformée de Fourier

Critère C2  |  Critère C3  |  Critère C4  |  Critère C5  |  Critère C6

**410'** Calcul score global

**500'** Algorithme d'apprentissage

# FIG. 2

EP 3 139 307 B1

**FIG. 3**

FIG. 4

**EP 3 139 307 B1**

## RÉFÉRENCES CITÉES DANS LA DESCRIPTION

### Documents brevets cités dans la description

- FR 3007170
- WO 2006085252 A
- WO 2006049396 A

### Littérature non-brevet citée dans la description

- Characterization of signals from multiscale edges. *IEEE Transaction on Pattern Analysis and Machine Intelligence,* 1992, vol. 14, 710-732